**Europäisches Patentamt**

**European Patent Office**

**Office européen des brevets**

(19)

(11) Veröffentlichungsnummer: **0 253 061**
A2

# (12) EUROPÄISCHE PATENTANMELDUNG

(21) Anmeldenummer: **87104159.6**

(22) Anmeldetag: **20.03.87**

(51) Int. Cl.⁴: **B 23 P 13/04**, B 23 P 15/06, B 22 D 11/00

(30) Priorität: **09.07.86 DE 3623122**

(43) Veröffentlichungstag der Anmeldung: **20.01.88**
**Patentblatt 88/3**

(84) Benannte Vertragsstaaten: **DE ES FR GB IT**

(71) Anmelder: **GOETZE AG,**
**Bürgermeister-Schmidt-Strasse 17,**
**D-5093 Burscheid 1 (DE)**

(72) Erfinder: **Neuhäuser, Hans-Jochem, Dr., Hufer Weg 13,**
**D-5060 Bergisch Gladbach 2 (DE)**
Erfinder: **Fischer, Hans, Burscheider Strasse 294,**
**D-5090 Leverkusen 3 (DE)**
Erfinder: **Veutgen, Hans Jürgen, Akazienweg 3,**
**D-5093 Burscheid (DE)**

(54) **Verfahren zur Herstellung von Kolbenringen.**

(57) Zur Herstellung von Kolbenringen für Verbrennungskraftmaschinen durch Gießen zylindrischer Buchsen aus vor allem Gußeisenlegierungen oder Stahllegierungen und Aufteilen der Buchsen zu einzelnen Ringen werden die Büchsen im Stranggußverfahren mit bevorzugt ovaler Kontur in wassergekühlte Kokillen gezogen, so daß die Kolbenringe aus den Büchsen wirtschaftlich mit geringem Material- und Arbeitsaufwand hergestellt werden können. Im Stranggußverfahren können die Büchsen aus den verschiedensten speziellen Gußeisen- und Stahllegierungen gezogen werden. Da Lunkerbildung in den Gußstücken weitgehend ausgeschlossen ist, können vor allem Kolbenringe mit Durchmessern bis zu 600 mm und Wandstärken von über 4 mm wirtschaftlich und ausschußsicher hergestellt werden.

EP 0 253 061 A2

1

Verfahren zur Herstellung von Kolbenringen

Beschreibung:

Die Erfindung betrifft ein Verfahren zur Herstellung von Kolbenringen für insbesondere Verbrennungskraftmaschinen durch Gießen zylindrischer Büchsen aus vorzugsweise Gußeisen oder Stahl und Abstechen der einzelnen Kolbenringe von den Büchsen.

Kolbenringe für Verbrennungskraftmaschinen bestehen in der Praxis überwiegend aus Gußeisen oder Stahl, wobei entsprechend der Belastung des Kolbenringes spezielle Gußeisen- und Stahllegierungen mit entsprechender Verschleißbeständigkeit, Elastizität, Festigkeit, Temperaturbeständigkeit und/oder gezielten Graphitausscheidungen verwendet werden. Das Gießen der Kolbenringrohlinge erfolgt dabei bevorzugt im Einzelgußverfahren im Sandstapelguß, oder es werden zylindrische Büchsen gegossen, von denen dann die einzelnen Ringe abgestochen werden.

Beim Einzelguß können die Ringe in grüne Sandformen mit berechneter Unrundheit gegossen werden, so daß bei der nachfolgenden Bearbeitung durch Ausschneiden eines Ringsegmentes am Einguß der Ring im eingebauten Zustand die gewünschte Spannungsverteilung besitzt. Nachteilig beim Sandguß sind Maßungenauigkeiten durch Schrumpfungen, Werkstofftreiben und/oder Gratbildungen (Formerausschuß), welche zu unkontrollierten Gußporositäten sowie besonders nachteiligen Lunkerbildungen führen, die in den nachträglichen

2

Bearbeitungsverfahren aufwendig und unter Ausschußbildung wieder entfernt werden müssen. Lunkerbildungen treten entsprechend der Erstarrungsgeometrie vor allem beim Gießen von Kolbenringen größerer Durchmesser mit entsprechend größeren axialen und radialen Wanddicken bevorzugt im Mittellinienbereich auf. Solche gießempfindlichen Kolbenringe werden daher meist als Doppelrohlinge gegossen, so daß die Mittellinienlunker durch Trennen zu Einzelringen weggearbeitet werden.

Zur Vermeidung von Lunkerbildungen und auch zur rationelleren Fertigung werden im Schleudergußverfahren Büchsen gegossen, von denen dann die einzelnen Rohlinge abgestochen werden. Durch das Gießen der Büchse in eine Kokille unter der Einwirkung der Zentrifugalkraft entsteht wohl ein feinkörniger lunkerfreier Guß mit dichtem Gefüge, das allerdings Phosphid-, Zementit-, Legierungs- oder Graphitrohlingen mit nachteiligen Einflüssen auf die technologischen Werkstoffeigenschaften, die mechanische Bearbeitbarkeit und das Funktionsverhalten der Kolbenringe im Betrieb aufweisen kann.

Den Forderungen nach minimalen Bearbeitungszugaben und ovalen Büchsenformen, wie sie für eine wirtschaftliche Fertigung hochwertiger Kolbenringe unerläßlich sind, kann aber mit dem Schleudergußverfahren nicht entsprochen werden. Im Schleudergßverfahren können nur Büchsen mit kreisrunder Form hergestellt werden, so daß die erforderliche Eigenspannung der abgestochenen Einzelringe durch aufwendige thermische und/oder mechanische Bearbeitungsverfahren eingestellt werden muß. Schleudergußbüchsen können darüberhinaus aus technischen Gründen nur mit einer Mindestwanddicke gegossen werden, welche den metallurgischen und bearbeitungstechnischen Ansprüchen nicht mehr gerecht werden.

In grünen Sandformen können zwar Büchsen mit berechneter Unrundheit hergestellt werden, und von den Büchsen können dann Ringe abgestochen werden, die nach dem Aufschneiden am Stoß die erforderliche Eigenspannung besitzen. Die bei diesen Gießverfahren sich ergebenden aufwendigen Formarbeiten, die relativ langen Verweilzeiten der Gußstücke in der Form sowie die über die Büchsenlänge oft ungleichen Bearbeitungszugaben (Aushebeformschrägen) am Außen- und Innendurchmesser wirken sich bei der Bearbeitung erschwerend und verteuernd aus und stellen eine wirtschaftliche Serienfertigung von Kolbenringen in Frage.

Hinzu kommen beim Sandgußverfahren metallurgische Nachteile. Beim Gießen dünnwandiger Sandgußbüchsen aus Gußeisen mit Kugelgraphit können aufgrund der hohen Formfüllung und bedingt durch die unterschiedlichen Querschnitte (Aushebe- und Formschrägen) Heterogenitäten im Gußgefüge entstehen.

Ebenso treten auch die beschriebenen Nachteile beim Gießen von Einzelringen im Sandguß auf, und vor allem Lunkerbildungen beim Gießen dünn- und dickwandiger Büchsen machen dieses Verfahren nur begrenzt einsatzfähig.

Der vorliegenden Erfindung liegt daher die Aufgabe zugrunde, ein Fertigungsverfahren zu finden, mit dem sich Kolbenringe mit kleinsten bis größeren Durchmessern mit entsprechenden

4

Wanddicken wirtschaftlich herstellen lassen. Das erfindungsgemäße Verfahren soll sich darüberhinaus zum Gießen der meisten für Kolbenringe verwendeten Gußeisenlegierungen, Stahllegierungen und gegebenenfalls weiteren Metallegierungen gleichermaßen eignen.

Diese Aufgabe wird gelöst, indem die für die Herstellung der Kolbenringe verwendeten Büchsen erfindungsgemäß in einem Stranggußverfahren gezogen werden.

Durch den Einsatz des Stranggußverfahrens können Hohlprofile aus den verschiedensten Metallegierungen auf der Gießanlage mit gleichbleibender Qualität bei längerer Produktionszeit mit hohem Ausstoß und dadurch wirtschaftlich gefertigt werden. Das Stranggußverfahren zeichnet sich durch optimale Dichtspeisung, je nach Bedarf durch runde oder unrunde Formgebung und Hohlprofile, hohe Maßgenauigkeit und minimale Bearbeitungszugaben gegenüber konventionellen Gußverfahren aus.

Im Stranggußverfahren werden die Hohlprofile bevorzugt schon beim ruckweisen Herausziehen aus der Stranggußkokille in Büchsen der erforderlichen Länge getrennt und dann in bekannter Weise zu Kolbenringen weiterverarbeitet. Da Stranggußkokillen und dadurch entsprechend die Hohlprofile einen berechneten Querschnitt besitzen, ist es möglich, ovale Büchsen herzustellen, deren Unrundheit so berechnet ist, daß die abgestochenen Ringe nach dem Herausschneiden des Ringsegmentes am Stoß kreisrund zusammengespannt werden können und ihre erforderliche Eigenspannung erhalten. Im Prinzip können aber auch Hohlprofile mit kreisrundem Querschnitt

5

hergestellt werden, die nachträglich zu thermisch oder mechanisch gespannten Kolbenringen verarbeitet werden.

Die verwendete Stranggußkokille wird bevorzugt wassergekühlt, so daß die Gußstücke in der Kokille unter Abschreckung erstarren und ein gleichmäßig feinkörniges, festes, gericht erstarrtes Gußgefüge erhalten. Es entstehen so Gußstücke hoher Maßgenauigkeit mit glatter Oberfläche weitgehend frei von Lunkerbildungen und anderen gießereibedingten Werkstoffporositäten. Weiter entfällt vorteilhaft ein wesentlicher Teil der beim Sandguß erforderlichen Einguß- und Anschnittsysteme, Strahl- und Putzarbeit, und die anschließenden Bearbeitungsprozesse können wesentlich gemindert werden. Die weitgehende Lunkerfreiheit erlaubt eine ausschußfreie Herstellung von Stranggußrohren kleinerer und größerer Querschnitte mit Durchmessern von 50 mm bis zu 600 mm und ensprechenden radialen Wanddicken von mehr als 4 mm, so daß sich das erfindungsgemäß eingesetzte Stranggußverfahren auch gut zur Herstellung größerer Kolbenringdurchmesser eignet. Wirtschaftlich vorteilhaft ist dabei die Einsparung von Bearbeitungsprozessen und verfahrens- und ausschußbedingtem Kreislaufmaterial. Die Wirtschaftlichkeit des erfindungsgemäßeingesetzten Stranggußverfahrens ergibt sich außerdem durch hohe Maßgenauigkeiten und Oberflächengüte, bei gleichmäßigen und gleichbleibenden Werkstoffeigenschaften der Gußstücke mit dichtem Gefüge, guter Bearbeitbarkeit und geringem Fertigungsaufwand.

Da die Gußstücke unter Abschreckung und vorwiegend relativ hart-karbidisch erstarren, sind anschließende

6

Wärmebehandlungsverfahren zur Einstellung des optimalen
Gefüges erforderlich. Bevorzugt erfolgt die Wärmebehandlung
direkt an der Büchse, im Prinzip kann sie aber auch am
abgetrennten Ring während einer seiner Bearbeitungsphasen
vorgenommen werden.

Gemäß der Erfindung werden bevorzugt im Stranggußverfahren
sphärolithische Gußeisenlegierungen zu runden oder ovalen
Hohlprofilen gegossen.

Die zur Herstellung dieser Gußeisenlegierungen erforderlichen
Behandlungsverfahren mit Kugelgraphitbildnern, wie elementarem
Magnesium oder einem Cermischmetall, usw. sowie die
erforderlichen Impfungen werden bevorzugt beim Vergießen der
Gußeisenschmelze im Stranggußofen erfolgen.

Das in der wassergekühlten Stranggußkokille überwiegend
meliert bis weiß, zementitisch erstarrende Gußeisen wird durch
eine Hochtemperatur-Karbidzerfallsglühung mit nachfolgender
Perlitisierung oder Abschreckvergütung wärmebehandelt, so daß
ein grau-erstarrtes feinkörniges Gußeisen mit sphärolithischer
Graphitausscheidung vorliegt. Das Gußstück ist hochbruchfest
und kann spanabhebend bearbeitet werden.

Außer Sphärogußeisenlegierungen können im Stranggußverfahren
auch niedrig bis hochlegierte Gußeisenqualitäten mit
Lamellengraphit, Vermiculargraphit, Tempergußlegierungen,
Stahllegierungen und gegebenenfalls auch für Kolbenringe
angewendete Stahlgußlegierungen gezogen werden. Die
erforderlichen Impfverfahren oder Behandlungsverfahren der

7

Schmelze oder die nachfolgenden Wärmebehandlungsverfahren sind auf die jeweilige Werkstoffqualität abzustimmen..

Durch den erfindungsgemäßen Einsatz des Stranggußverfahrens für die Herstellung von Kolbenringen können diese in hohen Stückzahlen wirtschaftlich bei gleichbleibender Werkstoffqualität gefertigt werden, und durch Einsparungen von Kreislaufmaterial und einem Teil der Bearbeitungsverfahren werden zusätzlich die Herstellungskosten gesenkt. Durch das im Stranggußverfahren erzielbare feinkörnige, lunkerfreie Gefüge der Kolbenringe sind diese den herkömmlich im Sandgußverfahren hergestellten Ringen funktionsmäßig überlegen, und die Lunkerfreiheit der Gußstücke erlaubt vorteilhaft eine problemlose Herstellung sowohl kleiner als auch großer Kolbenringe mit Durchmessern bis zu 600 mm und Wanddicken über 4 mm. Durch die gefundene universelle Gießbarkeit verschiedener Metallegierungen im Stranggußverfahren ist darüberhinaus die wirtschaftliche Ausnutzung der Stranggußanlagen gegeben.

In einem Ausführungsbeispiel wird von einer sphärolithischen Gußeisenlegierung mit

|  | | |
|---|---|---|
|  | 3,5 Gewichts-Prozent | Kohlenstoff |
|  | 2,7 Gewichts-Prozent | Silizium |
|  | 0,4 Gewichts-Prozent | Mangan |
| höchstens | 0,1 Gewichts-Prozent | Phosphor |
| höchstens | 0,05 Gewichts-Prozent | Schwefel |
|  | 0,2 Gewichts-Prozent | Chrom |
|  | 0,8 Gewichts-Prozent | Nickel |

8

und Eisen als Rest einschließlich herstellungsbedingter
Verunreinigungen, ausgegangen.

Die Gußeisenlegierung wird im Ofen erschmolzen und bei
Überführung in den Stranggußofen mit Magnesium modifiziert
und mit Ferrosilizium, welches bis zu 1,5 Gewichts-Prozent
Magnesium enthält, geimpft.

Im Stranggußverfahren werden Rohre mit ovalem Querschnitt und
einem maximalen Durchmesser von 600 mm und einer radialen
Wandstärke von 10 mm gezogen, und die Rohre werden zu Büchsen
mit einer axialen Höhe von 100 mm geteilt.

Die im Gußzustand vorliegend meliert bis weiß erstarrten
Büchsen werden bei 950°C einer Karbidzerfalls- und
Ferritisierungsglühung unterworfen, und die Büchsen werden
durch Drehen oder Fräsen zu axial einzelhohen
Kolbenring-Rohlingen aufgeteilt. Zur Entfernung des
Werkstoffgrates werden die Rohlinge axial vorgeschliffen, zu
Dornen verspannt und einer Wärmebehandlung zur Einstellung der
Werkstoffmatrix perlitisiert oder abschreckvergütet.

Die gefundenen technologischen Werkstoffdaten der fertig
bearbeiteten Kolbenringe sind die folgenden:

|  | Muster 1 | Muster 2 |
|---|---|---|
| Fertigabmessung mm ) | | |
| Außen-/Innendurchm.) | 93/85,2x1,6 | 450/417,6x9,87 |
| axiale Höhe ) | | |

9

| Elastizitätsmodul | 168480 N/mm$^2$ | 159640 N/mm$^2$ |
|---|---|---|
| Bruchaufweitung mm | mehr als 100 | mehr als 250 |
| Härte HRB | 108 - 111 | 108 - 111 |
| Härte HB (2,5/187,5) | 370 - 420 | 370 - 410 |
| Biegefestigkeit N/mm$^2$ | mehr als 14000 | mehr als 14000 |

Eine genauere Ermittlung der Biegefestigkeit ist wegen der
höheren Werkstoffduktilität nicht möglich.

1

Patentansprüche:

1. Verfahren zur Herstellung von Kolbenringen für insbesondere Verbrennungskraftmaschinen durch Gießen zylindrischer Büchsen vorzugsweise aus Gußeisen-, Stahl- oder Stahlgußlegierungen und Abstechen der einzelnen Ringe von den Büchsen, dadurch gekennzeichnet, daß die Büchsen im Stranggußverfahren gezogen werden.

2. Verfahren nach Anspruch 1, dadurch gekennzeichnet, daß die Büchsen beim Strangguß in wassergekühlten Stranggußkokillen gezogen werden.

3. Verfahren nach mindestens einem der Ansprüche 1 oder 2, dadurch gekennzeichnet, daß die Büchsen mit ovalem Querschnitt gezogen werden, so daß die Kolbenringe nach dem Abstechen von der Büchse und dem Herausschneiden eines berechneten Ringsegmentes am Stoß kreisrund zusammenspannbar sind.

4. Verfahren nach mindestens einem der Ansprüche 1 oder 2, dadurch gekennzeichnet, daß die Büchsen mit rundem Querschnitt gezogen werden, und daß die abgestochenen Kolbenringe nach dem Aufschneiden am Stoß zur Erreichung der erforderlichen Tangentialspannung einer thermischen Behandlung unterzogen werden.

5. Verfahren nach mindestens einem der Ansprüche 1 bis 4, dadurch gekennzeichnet, daß die Büchsen oder die

2

abgestochenen Ringe wärmebehandelt werden.

6. Verfahren nach mindestens einem der Ansprüche 1 bis 5, dadurch gekennzeichnet, daß als Metallegierung eine Sphärogußeisenlegierung verwendet wird, daß die Gußeisenschmelze vor der Überführung in den Stranggußofen mit kugelgraphitbildenden Vorlegierungen und einem herkömmlichen Impfmittel behandelt wird, daß das Gußeisen in der Stranggußkokille mit weißerstarrendem, zementitischem Grundgefüge gegossen wird, und daß die Büchsen durch Hochtemperaturglühung Karbidzerfallsglühung), Abschrecken und Anlassen (Abschreckvergütung) unter Bildung eines Vergütungsgefüges mit sphärolithischen Graphitausscheidungen wärmebehandelt werden.

7. Verfahren nach mindestens einem der Ansprüche 1 bis 6, dadurch gekennzeichnet, daß nach dem Verfahren Klein-, Mittel- und Großkolbenringe für Verbrennungskraftmaschinen mit einem Durchmesser von bis zu 600 mm und Wandstärken über 4 mm hergestellt werden.